# EUROPEAN PATENT SPECIFICATION

(11) **EP 1 593 449 B1**
(45) Date of publication and mention of the grant of the patent: **02.01.2013**
(21) Application number: 05252662.1
(22) Date of filing: 28.04.2005
(51) Int. Cl.: B23H 1/02, B23H 7/32, B23H 9/10, B23K 9/013

(54) **Distributed arc electroerosion**
Elektroerosion mit verteiltem Lichtbogen
Electroérosion avec un arc distribué

(30) Priority: 07.05.2004 US 842344
(43) Date of publication of application: 09.11.2005
(73) Proprietor: GENERAL ELECTRIC COMPANY, Schenectady, NY 12345 (US)
(72) Inventor: Lamphere, Michael Scott, Hooksett, New Hampshire 03106 (US); Wei, Bin, Mechanicville, New York 12188 (US); Yuan, Renwei, c/o Room 201, Building 43, Shanghai 201101 (CN); Wessels, Jeffrey Francis, Swampscott, Massachusetts 01917 (US)
(74) Representative: Illingworth-Law, William Illingworth

(56) References cited:
- EP-A- 1 249 294
- EP-A2- 1 166 936
- US-A- 5 115 112
- US-A1- 2003 173 337
- US-A1- 2003 173 337

## Description

The present invention relates generally to manufacturing processes, and, more specifically, to machining.

Precision machining is commonly effected using multiaxis numerically controlled (NC) milling machines. The cutting tool is suspended from a tool head which typically has three orthogonal axes of translation and one or more additional axes of rotation corresponding therewith. The workpiece or part to be machined is fixedly mounted to a bed which may impart additional axes of translation or rotary movement thereto.

During operation, the NC machine is programmed in software for controlling the machining or cutting path of the tool for precisely removing material from the workpiece to achieve the desired final dimensions thereof. The typical milling machine includes a rotary cutting tool having a controlled feedpath for removing material from the workpiece in successive passes finally approaching the desired machined configuration.

Great care must be exercised in programming and operating the NC machine to ensure that the intended precise machining of the workpiece is obtained. Damage to the workpiece during machining may require scrapping thereof, with an attendant loss in time and money corresponding therewith.

A particularly complex and expensive precision part is the typical bladed disk, or blisk, found in gas turbine engines. A gas turbine engine typically includes multiple stages of compressor rotor blades each mounted to the perimeter of a supporting disk. It is common to individually manufacture the compressor blades and mount them using suitable dovetails to the perimeter of the supporting disk.

Alternatively, the full row of compressor blades may also be manufactured integrally with the disk by machining slots in the perimeter of a disk workpiece resulting in a row of integral airfoils remaining after machining.

The initial blisk blank has a solid perimeter in which slots are machined for defining the resulting compressor airfoils extending radially outwardly from the supporting disk in a unitary, or one-piece component. The blisk material is typically a superalloy having enhanced strength, and is correspondingly expensive.

Blisk airfoils were originally manufactured from blanks using conventional NC machines with rotary milling tools for cutting the slots through the perimeter to form the airfoils. The resulting airfoils require substantially smooth and precisely configured surfaces, typically effected by additional machining processes on the initially formed blisk.

For example, electrochemical (ECM) machining is a conventional process in which cathode electrodes are specially built to achieve the desired final contours of the airfoils. An electrical current is passed through a liquid electrolyte in the gap between the electrodes and the workpiece for precisely removing small amounts of remaining material on the airfoils to achieve the desired final configuration thereof with substantially smooth surfaces.

The ECM process is effected in another form of multiaxis NC machine in which the electrodes undergo complex three dimensional (3D) movement as they approach an individual rough airfoil from its opposite pressure and suction sides.

The ECM process is particularly advantageous for quick removal of the superalloy material to the substantially final smooth finish required for the airfoil without undesirable damage thereto. Since the blisk workpiece requires multiple stages of manufacture and machining immediately prior to the forming of the airfoils therein considerable time and money are invested in the workpiece. And, as each of the multitude of airfoils around the blisk perimeter is machined, additional time and expense are invested which further increases the cost of the blisk.

Unacceptable damage to any one of the blisk airfoils or the supporting rotor disk itself during the various stages of manufacturing could render the entire blisk unusable for its intended use in a high performance gas turbine engine resulting in scrapping thereof with the attendant loss of time and expense.

In view of the considerable manufacturing time typically required in the production of blisks, manufacturing improvements are continually being developed for shortening the machining time and expense without increasing the chance of undesirable damage to the blisk during manufacturing.

For example, the ECM process may be specifically configured for initially forming rough airfoils in the blisk workpiece with a substantial reduction in time and expense over conventional milling machines. U.S. Patent 6,562,227, assigned to the present assignee, discloses one form of plunge electromachining specifically configured for this purpose.

Furthermore, electrical discharge machining (EDM) is yet another process for machining material in gas turbine engine components, for example. In EDM machining, a dielectric liquid is circulated between the electrode and the workpiece and electrical discharges are generated in the gap between the electrode and workpiece for electrically eroding material. The EDM process is typically used for drilling the multitude of small film cooling holes through the surfaces of turbine rotor blades and nozzle vanes.

U.S. Patent 6,127,642, assigned to the present assignee, discloses in combination the features of the preamble independent claim 1 and of the preamble of independent claim 10 and is one example of an EDM machine having a slender electrode supported with lower and middle guides for reducing undesirable flexing thereof during the drilling process.

Both the ECM and EDM processes use electrical current under direct-current (DC) voltage to electrically power removal of the material from the workpiece. In ECM, an electrically conductive liquid or electrolyte is circulated between the electrodes and the workpiece for permitting electrochemical dissolution of the workpiece material, as well as cooling and flushing the gap region therebetween. In EDM, a nonconductive liquid or dielectric is circulated between the cathode and workpiece to permit electrical discharges in the gap therebetween for removing the workpiece material.

In both ECM and EDM the corresponding electrodes thereof are typically mounted in multiaxis NC machines for achieving the precise 3D feedpaths required thereof for machining complex 3D workpieces, such as the airfoils of blades and vanes. The NC machines include digitally programmable computers and include suitable software which controls all operation thereof including the feedpaths and the separate ECM and EDM processes.

In particular, in both processes electrical arcing between the ECM or EDM electrodes and the workpiece must be prevented to prevent undesirable heat damage to the workpiece surface. Electrical arcing is the localized release of high electrical energy which can undesirably burn the workpiece surface and adversely affect the mechanical and material properties thereof.

As indicated above, the exemplary turbine blisk is formed of a superalloy metal having high strength characteristics which can be degraded due to excess temperature. Electrical arcing during the ECM or EDM processes can result in a relatively large recast layer or heat affected zone (HAZ) on the machined workpiece in which the material properties can be undesirably degraded.

Accordingly, both the ECM and EDM machining processes include sophisticated electrical circuits for detecting arcing or incipient arcing and adjusting the machining process to prevent or eliminate undesirable arcing during machining. In this way, the recast layer or heat affected zone in both processes may be minimized for ensuring maximum strength of the finally machined workpiece.

Notwithstanding the various processes for machining material in the production of gas turbine engine blisks, the manufacturing process therefor still requires a substantial amount of time and expense which correspondingly increases the cost of the blisk.

Accordingly, it is desired to provide an electroerosion machining apparatus and process capable of achieving even higher machining rates without attendant undesirable damage to the workpiece.

According to the invention, there is provided an electroerosion apparatus comprising a tubular electrode; a multiaxis machine including a tool head supporting said electrode for spinning thereof with multiple axes of movement, and a spindle for supporting a workpiece with an additional axis of movement; a power supply including leads for carrying power through said electrode and workpiece; an electrolyte supply including a conduit for circulating an electrolyte through said electrode; and a controller operatively joined to said multiaxis machine and said power supply for control thereof, and configured for distributing intermittent multiple electrical arcs between said electrode and workpiece temporally alternating with electrical discharges therebetween without electrical arcing.

The invention also includes a method of electroerosion machining of a workpiece as claimed in claim 10.

The invention will now be described in greater dertail, by way of example, with reference to the drawings, in which:-
Figure 1 is a schematic view of an exemplary embodiment of a distributed multiarc electroerosion apparatus for machining a workpiece supported therein.
Figure 2 is a schematic representation of the electroerosion apparatus of Figure 1 showing a portion of the workpiece being machined by the spinning electrode thereof.
Figure 3 is another schematic view of the electroerosion apparatus with a further enlarged view of the spinning electrode tip during the electroerosion machining process.

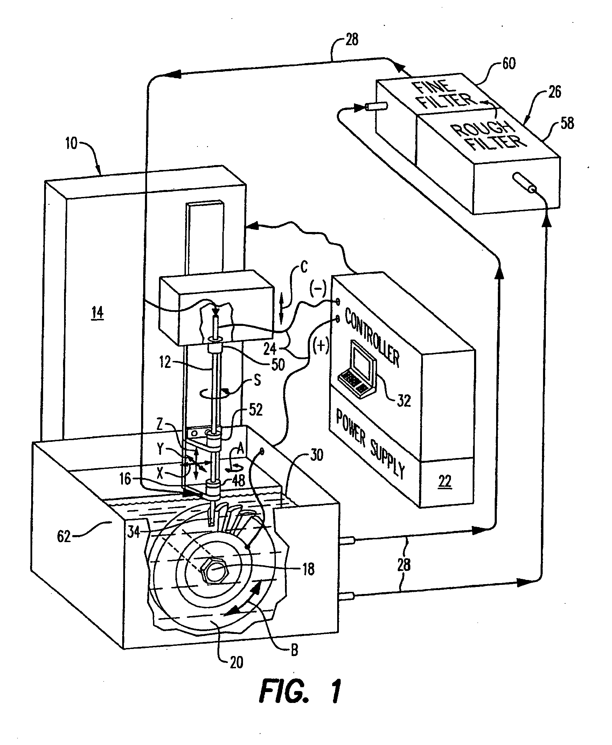

Illustrated schematically in Figure 1 is an electroerosion machine or apparatus 10 including a tubular cutting tool or electrode 12. The apparatus includes a multiaxis, numerically controlled (NC) machine 14 which includes a tool head 16 that supports the electrode for rotation or spinning S thereof, and multiple axes of movement during operation. The machine also includes a suitable support table in the exemplary form of a rotary spindle 18 which supports a workpiece 20, preferably with an additional axis of movement.

Means in the form of a conventional direct current (DC) power supply 22 are provided for carrying electrical power through the electrode 12 and workpiece 20 during operation. The power supply includes suitable electrical leads 24 correspondingly joined to the electrode 12 as a cathode (-) and the workpiece as an anode (+) in one embodiment. In alternate embodiments, the polarity may be reversed with an anode electrode and a cathode workpiece.

Since the electrode 12 spins during operation, the electrical lead therefor may be suitably joined thereto using a conventional electrical slip ring or other connection as desired. And, the lead for the workpiece may be directly attached thereto or to the supporting spindle 18 as desired.

Additional means in the form of an electrolyte supply 26 are provided for circulating an electrically conductive liquid or electrolyte 30 through the electrode 12 during operation. The electrolyte supply includes various conduits 28 for supplying clean and cool electrolyte to the electrode while returning debris-laden electrolyte from the machining site. The electrolyte may be plain water, or oil, or other liquid having weak to strong electrical conductivity as desired.

Means in the form of a digitally programmable electrical controller 32 are operatively joined to the NC machine 14 for controlling its operation, and additionally joined to the DC power supply 22 for also controlling its operation, and coordinating relative movement between the electrode and the workpiece during the electroerosion machining process. The controller 32 may have any conventional form and includes a central processing unit (CPU) and all attendant memory and data handling systems which may be programmed using suitable software for controlling all operations of the apparatus. A monitor and keyboard are provided with the controller for use both by the operator in controlling the electroerosion machining process, as well as by the programmer for initially setting up the machine for specific forms of workpieces.

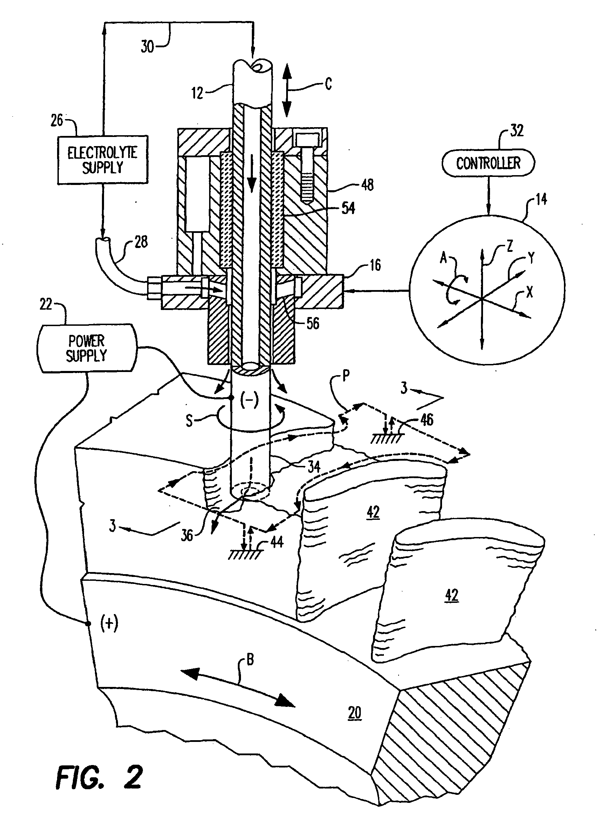

The electroerosion apparatus is illustrated in more detail in Figure 2 associated with the corresponding process or method of electroerosion of the workpiece 20. The process includes feeding the spinning tubular electrode 12 along a feedpath (P) across the workpiece 20, which is preferably held stationary. The electrolyte 30 is circulated through the spinning electrode and out through the tip 34 thereof closely adjacent to the workpiece being machined. The spinning electrode 12 is powered by the power supply 22 as a cathode while the workpiece is powered as an anode for electroeroding a corresponding slot 36 through the workpiece corresponding generally with the size of the cutting electrode itself.

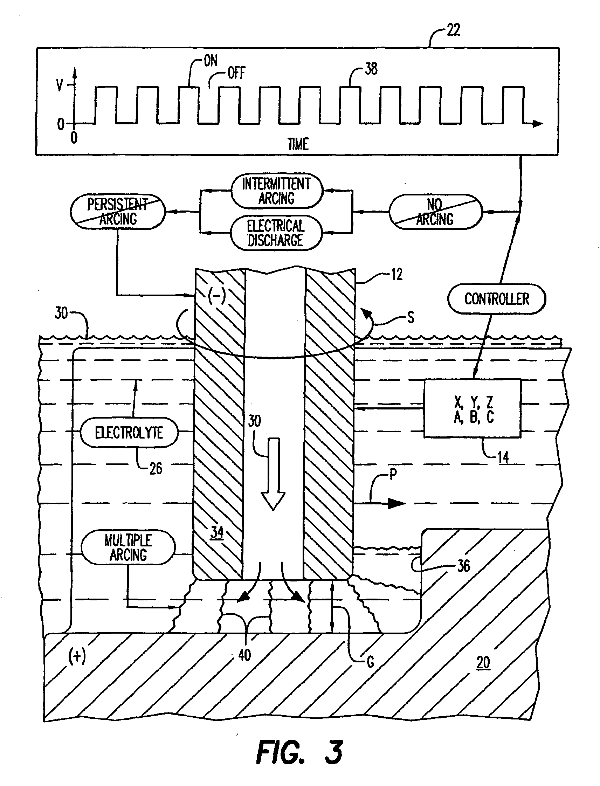

Figure 3 illustrates further enlarged the tip end of the electrode 12 as it electroerodes the slot 36 in the workpiece. In particular, the controller 32 is specifically configured for powering the spinning electrode 12 with a DC pulsed train or waveform 38 which has the technical effect of distributing spatially multiple electrical arcs 40 between the electrode tip 34 and the workpiece 20 for controlled electroerosion machining thereof. As the spinning electrode 12 travels along the programmed feedpath P through the workpiece, electrical power is carried through the electrode and the electrolyte in the small gap G maintained between the electrode tip and the workpiece for electrically eroding material from the workpiece to form the corresponding slot.

As indicated above, the production of electrical arcs in conventional EDM and ECM processes is strictly prohibited therein due to the associated damage therefrom. In EDM and ECM processes, the corresponding electrical controllers thereof include circuits specifically configured for detecting arcing or incipient arcing, to thereby prevent or terminate arcing during operation.

In contrast, the electroerosion process illustrated schematically in Figure 3 intentionally effects electrical arcing which is preferentially distributed spatially over the electrode tip during operation for substantially increasing the rate of material removal from the workpiece. The controller 32 is specifically configured for controlling the power supply 22 to power the spinning electrode with the DC pulse voltage waveform 38, while also controlling the multiaxis machine 14 to adjust the electrode travel through the workpiece and effect temporally intermittent, or transient, multiple electrical arcs between the electrode and workpiece.

Figure 3 also illustrates schematically that the controller 32 is configured between two extremes of operation to prevent no-arcing between the electrode and workpiece as represented by the no-arcing box with the diagonal line therethrough, and to prevent persistent or steady-state arcing similarly represented by the box with the diagonal line therethrough.

As indicated above, no-arcing operation is desired and achieved in conventional ECM and EDM electroerosion. And, persistent or continual arcing is undesirable in the ECM and EDM processes for the attendant thermal damage to the workpiece associated with a large recast or HAZ layer.

However, by both spatially and temporally distributing multiple electrical arcs between the spinning electrode and workpiece electroerosion material removal may be substantially enhanced, with a removal rate being substantially greater than that for both conventional EDM and conventional ECM, while minimizing the undesirable recast layer.

As shown schematically in Figure 3, the DC pulse waveform 38 effects a train of on and off DC voltage pulses to power the electroerosion process through the electrode tip. The electrical power is carried through the electrolyte 30 in the gap G between the electrode tip and the workpiece. The generation of the electrical arcs is random from pulse to pulse, but is nevertheless statistically repetitive and statistically controllable.

Accordingly, control of the power supply may be coordinated with the feedpath travel P of the electrode for effecting intermittent multiple electrical arcs 40 between the electrode tip and workpiece temporally alternating with electrical discharges between the electrode and workpiece without electrical arcing. In this way, the increase of material removal attributed to the multiple electrical arcs may be balanced with the resulting recast layer by alternating arcing with non-arcing electrical discharges. This balance may be determined for particular workpieces and particular machining processes empirically using both analysis and a series of test machining.

Key features of the spatially and temporally distributed multiarc electroerosion process illustrated in Figure 3 include fundamentally the use of an electrolyte, instead of a dielectric, in the gap between the electrode and workpiece, and spinning the electrode in the electrolyte. In this way, the spinning electrode is conducive to dispersing multiple, simultaneous electrical arcs between the electrode and workpiece, instead of a single electrical discharge arc, and effectively increases the electroerosion cutting area. Heat from the electroerosion process is therefore distributed over the entire surface area of the spinning electrode tip. Correspondingly, wear of the electrode tip itself is also distributed around its circumference.

Furthermore, clean and cool electrolyte 30 is channeled internally through the tubular electrode and out the orifice in the center of the electrode tip for providing clean and cool electrolyte in the machining gap G for promoting stability and distribution of the multiple electrical arcs. The electrolyte also flushes away the erosion debris from the machining process.

Quite significantly, a substantial increase in the electrical current may be used with the spinning electrode with a correspondingly lower peak current density due to the generation of the distributed multiple arcs, which combine to substantially increase the rate of material removal relative to conventional ECM and EDM machining processes.

The tool head 16 shown in Figure 1 is preferably supported in the multiaxis machine 14 with three axes X,Y,Z of linear and orthogonal translation, and one or more axes of rotation A such as that found around the linear axis X. The X axis is parallel to the plane of the exemplary workpiece 20 and normal to the spindle axis. The Y axis is parallel to the spindle axis and is in a horizontal plane with the X axis. And, the Z axis is vertical.

The tool head 16 may be mounted in the machine in any conventional manner for achieving these exemplary axes of movement, and is typically effected using suitable screw driven carriages powered by corresponding electrical servomotors. The various servomotors for the movement axes are operatively joined to the controller 32 which coordinates the movement thereof to in turn control the feedpath P of the electrode tip during operation. In this way, the electrode tip may follow a precise 3D feedpath through the workpiece as desired for machining complex 3D contours in the workpiece.

Correspondingly, the spindle 18 illustrated in Figure 1 is supported in the multiaxis machine 14 with a rotary axis B of movement effected by a corresponding servomotor. The B axis servomotor is also operatively joined to the controller 32 for preferably periodic rotational indexing of the exemplary workpiece 20 as required during operation.

For example, the exemplary workpiece illustrated in Figure 1 is in the form of an annular blisk blank, and the spindle 18 is configured for supporting the blank 20 coaxially thereon. The spindle 18 is in the form of a shaft, and the blisk blank has a center bore which may be mounted using a suitable fixture fixedly attached to the spindle for rotation therewith during operation.

The controller 32 is correspondingly configured for driving the spinning electrode 12 along arcuate feedpaths P as illustrated in more detail in Figure 2 axially through the outer perimeter of the blisk blank 20 for forming rough airfoils 42 extending radially outwardly from the perimeter of the workpiece relative to the centerline axis of the supporting spindle.

Since electroerosion cutting is limited to the tip region of the electrode 12 as illustrated in Figures 2 and 3, the controller 32 is further configured for driving the electrode 12 in successively radially deeper feedpaths axially through the workpiece 20 for electroerosion machining discrete rough airfoils 42 in turn in the blank. The slots 36 are therefore machined radially deeper from the outer perimeter of the workpiece for the desired full height of the resulting rough airfoils 42, which airfoils 42 are formed after machining complete slots on opposite sides thereof.

The rough airfoils 42 so machined include sufficient additional material thereon for undergoing a subsequent machining operation for removing the rough finish thereof and the thin recast layer for achieving the final dimension and smooth surface finish for the final airfoils of the blisk.

As the electrode 12 electroerodes material from the workpiece 20 as illustrated in Figure 3, it correspondingly wears and become shorter in length. Accordingly, the controller 32 is preferably additionally configured for compensating for this wear of the electrode which decreases the length thereof. For example, the controller may be configured for calculating wear per machining pass of the electrode and correspondingly adjusting the radial position of the electrode as the electrode completes each of its feedpath passes through the perimeter of the workpiece. The small gap G between the electrode tip and workpiece may be maintained substantially constant during the machining process, but is dynamically varied by the controller to control efficacy and stability of the multiarc erosion process.

As shown in Figure 2, the multiaxis machine 14 preferably includes one or more reference planes 44,46 associated with the length of the electrode 12. Correspondingly, the controller 32 may then be further configured for touching the electrode tip 34 against the reference plane prior to or immediately after each of the successive feedpaths through the workpiece, or at other intervals, to calibrate the radial position of the electrode tip. In this way, an accurate indication of the position of the electrode tip, and corresponding length of the electrode, may be stored in the controller for each pass of the electrode to improve the accuracy of the wear compensation of the electrode during machining. The tip position may otherwise be detected by other suitable means, such as by laser detection.

The electrode 12 illustrated in Figure 1 is slender or elongate, and is relatively long and thin with a suitable diameter for the intended workpiece. Sufficient length is provided in the electrode for compensating for the wear of the electrode during operation which reduces its length, with the electrode having a suitable length to diameter ratio initially greater than about 5 for example.

Accordingly, the tool head 16 illustrated in Figure 1 includes a lower tubular guide 48 for coaxially supporting the lower end of the electrode 12, with the lower distal tip 34 of the electrode being suspended therebelow and directly atop the workpiece. The lower guide supports the lower end of the electrode for rotary movement therein.

Correspondingly, the multiaxis machine 14 further includes a rotary collet or chuck 50 suitably joined to an upper extension of the tool head 16 above the lower guide for supporting and rotating or spinning the opposite top or proximal end of the elongate electrode 12. In this way, the top of the electrode is mounted in the spinning chuck, and the bottom of the electrode is mounted through the lower guide for permitting spinning thereof during operation.

Since the electrode should be sufficiently long for allowing sufficient time for electroerosion machining prior to the consumption thereof, the tool head 16 illustrated in Figure 1 preferably also includes a middle tubular guide 52 disposed longitudinally between the upper chuck 50 and the lower guide 48. The middle guide 52 coaxially supports an intermediate portion of the electrode 12 for restraining wobbling or radial flexing thereof during operation. In this way, accurate position of the electrode tip may be maintained during the machining process by maintaining the long, spinning electrode straight.

The chuck 50 illustrated in Figure 1 is preferably mounted on the common tool head 16 for selective elevation movement C thereon to push or index the electrode 12 downwardly through the lower guide 48 as the electrode wears at the tip 34 thereof. The chuck may be mounted in a suitable carriage powered by another servomotor for precisely controlling the vertical elevation of the proximal end of the electrode, and in turn controlling the vertical location of the lower electrode tip.

Accordingly, as the tip wears during operation, the electrode may be continually indexed lower as its length is reduced. When the electrode becomes too short for practical use, the machining process is temporarily interrupted for replacing the electrode with a new and longer electrode, and repositioning the chuck 50 to the top of its travel path.

The lower guide 48 is illustrated in a preferred embodiment in Figure 2 and includes a ceramic bushing 54 coaxially mounted therein in a suitable bore for coaxially supporting the electrode 12 extending therethrough. The ceramic bushing is wear resistant to the rotating electrode for ensuring its accurate support during spinning operation.

The lower guide may be made from multiple parts, including a main body in which the ceramic bushing 54 may be mounted, and covered by a removable lid fastened thereto by bolts. A lower body extends downwardly from the main body of the lower guide through a corresponding aperture in the tool head 16 for retention thereon.

The lower guide may be formed of stainless steel to resist corrosion from the electrolyte, and has a center bore spaced suitably outwardly from the electrode to provide a small radial gap therebetween, with the electrode being radially supported by the close fitting ceramic bushing 54 disposed therearound.

The lower guide may have a length to diameter ratio greater than about 3 for ensuring stable support of the lower end of the electrode during operation. The middle guide 52 may be similarly configured with a trapped ceramic bushing therein for supporting the intermediate portion of the electrode during operation. The middle guide as illustrated in Figure 1 is suitably supported from an additional arm of the tool head 16, which is adjustable in elevation as desired for minimizing any wobbling of the slender electrode during operation.

As further illustrated in Figure 2, the lower guide 48 preferably also includes a row of radial or inclined inlet holes 56 extending laterally therethrough to the center bore thereof, and joined in flow communication to the electrolyte supply 26. The supply conduit 28 may be fixedly joined to the lower arm of the tool head 16 through which the lower guide 48 is mounted to provide a common annular manifold around the row of inlet holes 56 for supplying electrolyte thereto under suitable pressure.

In this way, additional electrolyte is channeled through the lower guide and around the tip of the spinning electrode for external flushing of the electrode tip directly above the slot being machined by the electrode tip itself.

As shown in Figure 1, the proximal end of the electrode 12 is suitably joined to the conduit 28 in flow communication with the electrolyte supply 26 for channeling the electrolyte through the electrode. The electrolyte is internally channeled through the electrode and discharged out the bore of the electrode tip to locally flush the gap between the tip and workpiece during operation.

The electrolyte supply 26 illustrated in Figure 1 includes various pipes or conduits for circulating the electrolyte to and from the cutting region of the spinning electrode, and corresponding pumps therefor. Preferably, the electrolyte supply includes two stage filters 58,60 for successively filtering from the electrolyte relatively large or rough and relatively small or fine erosion debris generated during the electroerosion of the workpiece.

The electrolyte supply preferably also includes a work tank 62 containing the spindle 18 and workpiece mounted thereto. The tank is sized for being filled with electrolyte 30 in a pool to submerge the workpiece 20 and the electrode tip during the electroerosion process. The bottom of the tank may be suitably connected to the rough filter 58 for removing the large debris particles from the electrolyte. The rough filter is in turn joined in flow communication with the fine filter 60 for removing even smaller debris particles. And, the upper portion of the tank 62 may be directly joined to the fine filter and bypassing the rough filter.

The rough and fine filters 58,60 may have any suitable configuration, such as a filtering conveyor belt in the rough filter 58, and rolled paper filters for the fine filter for effectively removing erosion debris from the electrolyte prior to return to the spinning electrode. Suitable cooling of the electrolyte may also be provided to remove therefrom heat generated during the electroerosion process.

The two stage filters 58,60 are preferably joined in flow communication with the electrode 12 for effecting both internal and external flushing thereof to enhance the stability of the intermittent multiple electrical arcs generated at the tip end of the electrode during operation. Internal flushing is provided by channeling a portion of the electrolyte through the center bore of the electrode and out its tip end. And, external flushing is provided by channeling another portion of the electrolyte through the lower guide 48 as indicated above, while also optionally bathing the entire workpiece in the bath of electrolyte contained in the work tank 62.

Significant features of the electroerosion apparatus disclosed above include the spinning electrode and its feedpath P coordinated with control of the electrical power provided thereto as illustrated schematically in Figure 3. The power supply 22 is configured for generating DC voltage in the preferred range of about 20 to 60 volts, which is typically greater than the voltage range for conventional ECM and generally less than the voltage range for conventional EDM.

Correspondingly, the power supply is further configured for generating relatively high electrical current in the exemplary range of about 80 to 600 amps, with a correspondingly high average current density in the range of 1900 to 12,000 amps per square inches (295-1860 amps per square centimeter).

The relatively high current and average density thereof promote correspondingly large electroerosion material removal, with the additional advantage of relatively low peak current density of about 1000 amps per square inch (155 amps per square centimeter). The low peak current density is attributable to the multiple electrical arcs distributed over the entire cutting area of the electrode tip, as opposed to a single electrical arc. The low peak current density minimizes the production of the recast layer in the surface of the machine workpiece and prevents unacceptable heat affected damage thereto.

The low peak current density may be compared to the high peak current density of multiple orders of magnitude greater in conventional EDM machining in the event of the generation of an electrical arc therein. In EDM, a dielectric liquid is used between the electrode and workpiece and promotes a single electrical discharge or arc in which the entire electrical current is dissipated. That single high current arc has the potential to cause significant damage unless it is avoided or terminated in its incipiency.

The power supply 22 illustrated in Figure 3 is under the control of the controller 32 and is preferably also configured for effecting a DC voltage pulse train having a voltage on-time in the range of about 300 to 1500 microseconds. Correspondingly, the DC voltage pulse train preferably also has a voltage off-time in the range of about 110 to 1,000 microseconds.

These pulse on and off times may be adjusted by the controller during the electroerosion process to control the generation of the intermittent multiple electrical arcs from the electrode tip alternating with electrical discharges without arcing. The alternating arcs and discharges may be balanced by maximizing the electroerosion removal rate while minimizing recast or heat affected surface layers on the workpiece.

The controller 32 may be preferentially configured for coordinating power to the spinning electrode 12 and the rate of movement or feedrate thereof across the workpiece for electroerosion machining the slot 36 at a machining rate exceeding about 1500 cubic millimeters per minute, without undesirable thermal damage or recast layers in the workpiece.

For example, testing indicates a substantially high material removal rate for the exemplary superalloy Inconel 718 blisk workpiece of 1500 cubic millimeters per minute for an electrode with 120 amp current and having a diameter of about 7.5 millimeters, with a corresponding frontal electrode area of 22 square millimeters. Testing additionally indicates a removal rate of about 2000 cubic millimeters per minute for an electrode having a 13 millimeter diameter with a corresponding frontal electrode area of about 52 square millimeters. And, testing further indicates a removal rate of about 3000 cubic millimeters per minute for an electrode having a 20 millimeter diameter and a corresponding frontal electrode area of about 80 square millimeters.

Compared with conventional electrical discharge machining, as well as electrochemical machining, these material removal rates attributed to the distributed multiarc electroerosion process described herein are orders of magnitude greater in a stable process without undesirable heat affected damage to the workpiece.

The introduction of distributed multiple electrical arcs between the spinning electrode and the workpiece in the presence of an electrolyte therebetween permits a substantial increase in the material removal rate of the electroerosion process which substantially exceeds the material removal rates of conventional EDM and ECM processes. Where those latter processes intentionally prohibit electrical arcing between the electrode and workpiece, the distributed arc process disclosed above preferentially introduces multiple electrical arcs with high average current density, yet low peak current density for maximizing material removal rate.

Accordingly, electroerosion of the workpiece may be effected more quickly than previously possible, without undesirable damage thereto, for reducing both the time and expense associated in the manufacture of the workpiece, which is particularly significant for complex and expensive workpieces such as the exemplary gas turbine engine rotor blisk disclosed above.

## Claims

1. An electroerosion apparatus (10) comprising:
a tubular electrode (12);
a multiaxis machine (14) including a tool head (16) supporting said electrode for spinning thereof with multiple axes of movement, and a spindle (18) for supporting a workpiece (20) with an additional axis of movement;
a power supply (22) including leads (24) for carrying power through said electrode (12) and workpiece (20);
an electrolyte supply (26) including a conduit (28) for circulating an electrolyte (30) through said electrode (12); **characterised by**
a controller (32) operatively joined to said multiaxis machine (14) and said power supply (22) for control thereof, and configured for distributing intermittent multiple electrical arcs (40) between said electrode (12) and workpiece (20) temporally alternating with electrical discharges therebetween without electrical arcing.

2. An apparatus according to claim 1 wherein:
said tool head (16) is supported in said multiaxis machine (14) with three axes of linear translation and one axis of rotation, and operatively joined to said controller (32) for coordinated movement thereof to control said feedpath of said electrode (12); and
said spindle (18) is supported in said multiaxis machine (14) with a rotary axis of movement, and is operatively joined to said controller (32) for rotationally indexing said workpiece (20).

3. An apparatus according to claim 2 wherein said controller (32) is further configured for driving said electrode (12) in successively deeper feedpaths through said workpiece (20) for electromachining slots (36) therethrough.

4. An apparatus according to claim 3 wherein said controller (32) is further configured for compensating for wear of said electrode (12) which decreases length thereof.

5. An apparatus according to claim 4 wherein:
said electrode (12) is slender;
said tool head (16) includes a lower tubular guide (48) for supporting a lower end of said electrode (12), with a lower distal tip (34) thereof being suspended therebelow; and
said multiaxis machine (14) further includes a rotary chuck (50) joined to said tool head (16) above said lower guide (48) for supporting and spinning an opposite proximal end of said electrode (12).

6. An apparatus according to claim 5 wherein said tool head (16) further includes a middle tubular guide (52) disposed between said chuck (50) and lower guide (48) for supporting an intermediate portion of said electrode (12),

7. An apparatus according to claim 6 wherein said lower guide (48) includes a row of inlet holes (56) extending laterally therethrough to the bore thereof and joined in flow communication with said electrolyte supply (26) for channeling said electrolyte therethrough.

8. An apparatus according to claim 7 wherein said proximal end of said electrode (12) is joined in flow communication with said electrolyte supply (26) for channeling said electrolyte through said electrode for discharge from said electrode tip (34).

9. An apparatus according to any preceding claim wherein said controller (32) is further configured for controlling said power supply (22) to power said electrode (12) with a direct current (DC) pulse waveform (38), and controlling said multiaxis machine (14) to adjust said electrode travel through said workpiece and effect intermittent multiple electrical arcs between said electrode and workpiece.

10. A method of electroerosion machining a workpiece (20) comprising:
feeding a spinning tubular electrode (12) along a feed path across said workpiece (20);
circulating an electrolyte (30) through said spinning electrode to the tip (34) thereof adjacent said workpiece;
filtering said circulating electrolyte (30) to remove electroerosion debris therefrom;
**characterised by**
powering said spinning electrode (12) and said workpiece with a DC pulsed waveform (38) for distributing intermittent multiple electrical arcs between said electrode tip (34) and said workpiece temporally alternating with electrical discharges between said spinning electrode tip and workpiece without electrical arcing for electroerosion machining a slot (36) through said workpiece.

## Patentansprüche

1. Elektroerosionsvorrichtung (10), aufweisend:
eine rohrförmige Elektrode (12);
eine Mehrachsenmaschine (14) mit einem Werkzeugkopf (16), der die Elektrode für deren schnelle Drehung in mehreren Bewegungsachsen lagert, und eine Spindel (18) zum Lagern eines Werkstückes (20) mit einer zusätzlichen Bewegungsachse;
eine Stromversorgungseinrichtung (22) mit Zuleitungen (24) zum Transportieren von Strom durch die Elektrode (12) und das Werkstück (20);
eine Elektrolytversorgungseinrichtung (26) mit einer Leitung (28), um einen Elektrolyten (30) durch die Elektrode (12) zirkulieren zu lassen;
**gekennzeichnet durch**:
eine Steuerung (32), die funktionell mit der Mehrachsenmaschine (14) und der Stromversorgungseinrichtung (22) für deren Steuerung verbunden und dafür eingerichtet ist, intermittierende mehrfache elektrische Lichtbögen (40) zwischen der Elektrode (12) und dem Werkstück (20) zeitlich mit elektrischen Entladungen dazwischen ohne elektrische Lichtbogenbildung zu verteilen.

2. Vorrichtung nach Anspruch 1, wobei:
der Werkzeugkopf (16) in der Mehrachsenmaschine (14) mit drei Lineartranslationsachsen und einer Rotationsachse gelagert und funktionell mit der Steuerung (32) für seine koordinierte Bewegung zum Steuern des Zustellpfades der Elektrode (12) verbunden ist; und
die Spindel (18) in der Mehrachsenmaschine (14) mit einer Rotationsbewegungsachse gelagert ist und funktionell mit der Steuerung (32) zur stufenweisen Drehung des Werkstückes (20) verbunden ist.

3. Vorrichtung nach Anspruch 2, wobei die Steuerung (32) ferner dafür eingerichtet ist, die Elektrode (12) in aufeinanderfolgend tiefere Zustellpfade durch das Werkstück (20) hindurch zur elektrischen Bearbeitung von Schlitzen (36) durch dieses zu steuern.

4. Vorrichtung nach Anspruch 3, wobei die Steuerung (32) ferner zur Kompensation des Verschleißes der Elektrode (12) eingerichtet ist, welcher deren Länge verkürzt.

5. Vorrichtung nach Anspruch 4, wobei:
die Elektrode (12) schlank ist;
der Werkzeugkopf (16) eine untere rohrförmige Führung (48) zur Lagerung eines unteren Endes der Elektrode (12) enthält, wobei deren untere distale Spitze (34) daraus herabhängt; und
die Mehrachsenmaschine (14) ferner ein rotierendes Spannfutter (50) aufweist, das mit dem Werkzeugkopf (16) oberhalb der unteren Führung (48) verbunden ist, um ein gegenüberliegendes proximales Ende der Elektrode (12) zu lagern und sich schnell drehen zu lassen.

6. Vorrichtung nach Anspruch 5, wobei der Werkzeugkopf (16) ferner eine mittige rohrförmige Führung (52) aufweist, die zwischen dem Spannfutter (50) und der unteren Führung (48) zur Lagerung eines Zwischenabschnittes der Elektrode (12) angeordnet ist.

7. Vorrichtung nach Anspruch 6, wobei die untere Führung (48) eine Reihe von Einlasslöchern (56) enthält, die sich seitlich dadurch hindurch zu ihrer Bohrung erstrecken und mit der Elektrolytversorgungseinrichtung (26) in Strömungsverbindung verbunden sind, um den Elektrolyten dadurch hindurchzuführen.

8. Vorrichtung nach Anspruch 7, wobei das proximale Ende der Elektrode (12) in Strömungsverbindung mit der Elektrolytversorgungseinrichtung (26) zum Durchführen des Elektrolyten durch die Elektrode zur Ausgabe aus der Elektrodenspitze (34) verbunden ist.

9. Vorrichtung nach einem der vorstehenden Ansprüche, wobei die Steuerung (32) ferner dafür eingerichtet ist, die Stromversorgungseinrichtung (22) zum Versorgen der Elektrode (12) mit einer Gleichstrom-(DC)-Impulswellenform (38) zu steuern, und die Mehrachsenmaschine (14) zum Einstellen des Elektrodenweges durch das Werkstück und zum Bewirken intermittierender mehrerer elektrischer Lichtbögen zwischen der Elektrode und dem Werkstück zu steuern.

10. Verfahren zur Elektroerosionsbearbeitung eines Werkstückes (20) mit den Schritten:
Zustellen einer sich schnell drehenden rohrförmigen Elektrode (12) entlang eines Zustellpfades quer zu dem Werkstück (20);
Bewirken einer zirkulation eines Elektrolyten (30) durch die sich schnell drehende Elektrode zu deren an das Werkstück angrenzenden Spitze (34);
Filtern des zirkulierenden Elektrolyten (30) zum Entfernen von Elektroerosionsschmutz daraus;
**gekennzeichnet durch** den Schritt:
Versorgen der sich schnell drehenden Elektrode (12) und des Werkstückes mit einer Gleichstrom-Impulswellenform (38) zum Verteilen intermittierender mehrfacher elektrischer Lichtbögen zwischen der Elektrodenspitze (34) und dem Werkstück in zeitlicher Abwechslung mit elektrischen Entladungen zwischen der sich schnell drehenden Elektrodenspitze und dem Werkstück ohne elektrische Lichtbogenbildung zur Elektroerosionsbearbeitung eines Schlitzes (36) **durch** das Werkstück.

## Revendications

1. Appareil d'électroérosion (10), comprenant :
une électrode tubulaire (12) ;
une machine à axes multiples (14), comportant une tête porte-outil (16), supportant ladite électrode, pour faire tourner celle-ci avec des axes multiples de déplacement et une broche (18), destinée à supporter une pièce à usiner (20), avec un axe supplémentaire de déplacement ;
une alimentation en courant (22), comportant des fils d'amenée (24), destinés à acheminer le courant dans ladite électrode (12) et la pièce à usiner (20) ;
une alimentation (26) d'électrolyte, comportant un conduit (28), destiné à faire circuler un électrolyte (30) dans ladite électrode (12),
**caractérisé par**
un contrôleur (32), couplé de manière opérationnelle à ladite machine à axes multiples (14) et à ladite alimentation en courant (22) pour le contrôle de celles-ci et configuré pour distribuer des arcs électriques multiples intermittents (40) entre ladite électrode (12) et la pièce à usiner (20), en alternant temporairement avec des décharges électriques entre celles-ci sans formation d'un arc électrique.

2. Appareil selon la revendication 1, dans lequel :
ladite tête porte-outil (16) est supportée dans ladite machine à axes multiples (14) avec trois axes de translation linéaire et un axe de rotation et couplée de manière opérationnelle audit contrôleur (32) pour un déplacement coordonné de celle-ci, pour contrôler ladite trajectoire d'avance de ladite électrode (12) et
ladite broche (18) est supportée dans ladite machine à axes multiples (14) avec un axe de rotation de déplacement et est couplée de manière opérationnelle audit contrôleur (32), pour indexer à rotation ladite pièce à usiner (20).

3. Appareil selon la revendication 2, dans lequel ledit contrôleur (32) est configuré, en outre, pour piloter ladite électrode (12) dans des trajectoires d'avance successivement plus profondes dans ladite pièce à usiner (20), pour électro-usiner des rainures (36) au travers.

4. Appareil selon la revendication 3, dans lequel ledit contrôleur (32) est configuré, en outre, pour compenser l'usure de ladite électrode (12), qui diminue la longueur de celle-ci.

5. Appareil selon la revendication 4, dans lequel :
ladite électrode (12) est mince ;
ladite tête porte-outil (16) comporte un guide tubulaire inférieur (48), destiné à supporter une extrémité inférieure de ladite électrode (12), un bout distal inférieur (34) de celle-ci étant suspendue au-dessous et
ladite machine à axes multiples (14) comporte, en outre, un mandrin rotatif (50), couplé à ladite tête porte-outil (16), au-dessus dudit guide inférieur (48), pour supporter et faire tourner une extrémité proximale opposée de ladite électrode (12).

6. Appareil selon la revendication 5, dans lequel ladite tête porte-outil (16) comporte, en outre, un guide tubulaire central (52), disposé entre ledit mandrin (50) et le guide inférieur (48), pour supporter une partie intermédiaire de ladite électrode (12).

7. Appareil selon la revendication 6, dans lequel ledit guide inférieur (48) comporte une rangée de trous d'entrée (56), s'étendant latéralement au travers vers l'alésage de ceux-ci et couplée en communication d'écoulement avec ladite alimentation (26) d'électrolyte, pour canaliser ledit électrolyte au travers.

8. Appareil selon la revendication 7, dans lequel ladite extrémité proximale de ladite électrode (12) est couplée, en communication d'écoulement, avec ladite alimentation (26) d'électrolyte, pour canaliser ledit électrolyte dans ladite électrode pour une décharge du bout (34) de ladite électrode.

9. Appareil selon l'une quelconque des revendications précédentes, dans lequel ledit contrôleur (32) est configuré, en outre, pour contrôler ladite alimentation en courant (22), pour alimenter ladite électrode (12) avec une forme d'onde d'impulsion (38) en courant continu (CC) et contrôler ladite machine à axes multiples (14), pour ajuster le parcours de ladite électrode dans ladite pièce à usiner et produire des arcs électriques multiples intermittents entre ladite électrode et ladite pièce à usiner.

10. Procédé d'usinage par électroérosion d'une pièce à usiner (20), comprenant les opérations, consistant à :
faire avancer une électrode tubulaire pivotante (12) le long d'une trajectoire d'avance dans toute ladite pièce à usiner (20) ;
faire circuler un électrolyte (30) dans ladite électrode pivotante vers le bout (34) de celle-ci, attenant à ladite pièce à usiner ;
filtrer ledit électrolyte de circulation (30), pour enlever les débris d'électroérosion de celui-ci,
**caractérisé par** l'opération, consistant à
alimenter ladite électrode pivotante (12) et ladite pièce à usiner avec une forme d'onde pulsée (38) en CC, destinée à distribuer des arcs électriques multiples intermittents entre le bout (34) de ladite électrode et ladite pièce à usiner, en alternant temporairement avec des décharges électriques entre le bout de ladite électrode pivotante et ladite pièce à usiner, sans former d'arc électrique, pour usiner par électroérosion une rainure (36) dans ladite pièce à usiner.
